# EUROPÄISCHE PATENTSCHRIFT

(11) **EP 3 332 858 B1**
(45) Veröffentlichungstag und Bekanntmachung des Hinweises auf die Patenterteilung: **02.09.2020**
(21) Anmeldenummer: 16202649.6
(22) Anmeldetag: 07.12.2016
(51) Int. Cl.: B01D 46/00, B01D 46/10, B01D 46/52

(54) **FILTERELEMENT**
FILTER ELEMENT
ÉLÉMENT FILTRANT

(43) Veröffentlichungstag der Anmeldung: 13.06.2018
(73) Patentinhaber: Carl Freudenberg KG, 69469 Weinheim (DE)
(72) Erfinder: Brack, Regina, 68199 Mannheim (DE); Haefner, Uwe, 77694 Kehl (DE); Oelsner, Alexander, 68309 Mannheim (DE)

(56) Entgegenhaltungen:
- EP-A2- 0 983 784
- DE-A1- 1 782 600
- DE-A1- 10 320 260
- DE-A1- 19 530 435
- JP-A- 2006 271 567

## Beschreibung

Die Erfindung betrifft ein Filterelement, umfassend einen zick-zack-förmigen Faltenbalg mit Faltenwänden und Faltenrücken, wobei die Kanten der Faltenwände und Faltenrücken mit einem Kantenelement versehen sind und wobei zumindest einer Endfalte des Faltenbalgs ein Rahmenelement zugeordnet ist.

Derartige Filterelemente weisen ein flächiges Filtermaterial auf, welches in einer Vorrichtung in eine Zick-Zack-Form gebracht wurde, um die Filteroberfläche zu vergrößern. Dadurch bilden sich zueinander schräg gestellte Faltenwände, welche jeweils durch Faltenrücken begrenzt sind. Quer zu den Faltenrücken ist an den Kanten der Faltenwände und Faltenrücken ein Kantenelement angebracht, welches zumeist stoffschlüssig an den Kanten befestigt ist. Ein derartiges Filterelement hat eine zumeist kastenförmige Gestalt. Die Kantenelemente bewirken einerseits eine Formstabilität des Filterelementes und andererseits eine Abdichtung, welche verhindert, dass in dem Filtergehäuse, in welchem das Filterelement angeordnet ist, ungereinigte Zuluft um das Filterelement herumströmen kann.

Dabei ist die Anordnung eines Kantenelementes an den Seiten, welchen die Kanten zugeordnet sind, besonders einfach. An den beiden Stirnseiten des Filterelementes, welche durch jeweils eine Endfalte, bzw. eine Endfaltenkante begrenzt sind, ist die Anordnung eines Kantenelementes nicht ohne weiteres möglich. Durch die nachgiebige Gestalt der Endfalte ist die Befestigung des Kantenelementes erschwert. Darüber hinaus kann sich eine ungenügende Abdichtung des Filterelements im Bereich der beiden Stirnseiten ergeben.

Allgemein sind Rahmenelemente aus thermoplastischem Grundstoff oder aus elastomerem Material bekannt. Diese sind aber aufwendig in der Herstellung.

Aus der DE 10 2008 024 412 A1 ist ein Filterelement bekannt, bei welchem den Endfalten des Faltenbalgs ein Rahmenelement zugeordnet ist. Dabei ist das Rahmenelement stoffschlüssig mit der Endfalte verbunden. Der zusätzliche Herstellungsschritt des stoffschlüssigen Anbindens des Rahmenelementes ist vergleichsweise aufwendig.

JP 2006 271567 A zeigt ein Filterelement mit den Merkmalen des Oberbegriffs des Patentanspruchs 1, wobei nicht gezeigt ist, dass das Rahmenelement so ausgebildet ist, dass es sich in Richtung der dem Faltenbalg abgewandten Seite abwölbt.

Die DE 103 20 260 A1 zeigt ein Filterelement, bei welchem dem Rahmen ein streifenförmiges, stauchbares Dichtelement zugeordnet ist. Das Dichtungselement kann an einem Rahmenelementteil befestigt sein. Dabei können sich sowohl das Rahmenelementteil als auch das Dichtungselement in Richtung der dem Faltenbalg abgewandten Seite abwölben. Dabei sind sowohl das Dichtungselement als auch das Rahmenelementteil so ausgebildet, dass es lediglich außenseitig der Endfalte zugeordnet ist.

Der Erfindung liegt die Aufgabe zugrunde, ein Filterelement, umfassend einen zick-zack-förmigen Faltenbalg bereitzustellen, welches bei einfacher

Herstellbarkeit eine sichere Abdichtung entlang der umlaufenden Kanten des Filterelements gewährleistet.

Diese Aufgabe wird mit den Merkmalen von Anspruch 1 und 11 gelöst. Auf vorteilhafte Ausgestaltungen nehmen die Unteransprüche Bezug.

Zur Lösung der Aufgabe gemäß der Ausgestaltung gemäß Anspruch 1 umgibt das Rahmenelement die Endfalten unter Bildung eines Formschlusses beidseitig, wobei das Rahmenelement an den Kantenelementen festgelegt ist.

Dabei umgibt das Rahmenelement sowohl die dem Faltenbalg abgewandte erste Hauptseite der Endfalte, die Längskante der Endfalte und die dem Faltenbalg zugewandte zweite Hauptseite der Endfalte. Das Rahmenelement ist vorzugsweise V-förmig ausgebildet, wobei die Endfalte in das Rahmenelement unter Bildung eines Formschlusses eingesteckt ist. Dabei ist die Längskante der Endfalte der in Längsrichtung verlaufenden Spitze des V-förmigen Rahmenelementes zugeordnet.

Das Rahmenelement ist so ausgebildet, dass es sich in Richtung der dem Faltenbalg abgewandten Seite abwölbt. Dadurch, dass das Rahmenelement an die Kantenelemente angebunden ist ergibt sich eine bogenförmige Wölbung des Rahmenelementes, so dass das Filterelement nach Einlegen in ein Filtergehäuse im Bereich des Rahmenelementes mit elastischer Vorspannung dichtend an dem Filtergehäuse anliegt. Dadurch verbessert sich die Abdichtwirkung im Bereich der Stirnseiten des Filterelementes.

Das Rahmenelement ist aus Vliesstoff ausgebildet. Dadurch ist das Rahmenelement kostengünstig und ist aus ähnlichem Material ausgebildet wie der Faltenbalg, was die spätere Entsorgung des Filterelementes vereinfacht. Des Weiteren ist ein Rahmenelement aus Vliesstoff leicht und flexibel, was die Abdichtung des Filterelementes im Bereich der Stirnseiten verbessert.

Das Rahmenelement ist vorzugsweise stoffschlüssig mit den Kantenelementen verbunden, so dass das Rahmenelement fest in das Filterelement eingebunden ist. Durch die formschlüssige Verbindung von Rahmenelement und Endfalte ist die Endfalte sicher fixiert und eine sichere Abdichtung des Filterelementes im Bereich der Stirnseiten ist ebenfalls gewährleistet.

Besonders bevorzugt ist das Rahmenelement ausschließlich mit den Kantenelementen stoffschlüssig verbunden. Dadurch vereinfacht sich die Herstellung des Filterelementes, da es auch bei Ausstattung des Filterelementes mit einem zusätzlichen Rahmenelement lediglich erforderlich ist, eine stoffschlüssige Verbindung im Bereich der Kanten vorzusehen.

Dadurch, dass das Rahmenelement ausschließlich formschlüssig mit der Endfalte verbunden ist, ergibt sich eine höhere Beweglichkeit des Rahmenelementes, so dass sich dadurch die Abdichtung des Filterelementes in einem Filtergehäuse im Bereich der Stirnseiten verbessert.

Die Anbindung der Kantenelemente an den Faltenbalg und an die Rahmenelemente folgt vorzugsweise über eine stoffschlüssige Verbindung. Diese kann durch Ultraschallschweißen oder über eine Klebeverbindung hergestellt werden. Eine bevorzugte Klebeverbindung erfolgt unter Verwendung eines heißschmelzenden Klebemittels. Bei dem erfindungsgemäßen Filterelement ist es lediglich erforderlich, ein Klebemittel im Bereich der quer zu den Faltenrücken verlaufenden Kanten des Faltenbalgs aufzutragen, was die Herstellung vereinfacht.

Der Faltenbalg kann aus einem Vliesstoff ausgebildet sein. Vliesstoffe sind besonders geeignete und bewährte Materialien für Filterelemente. Dabei kann der Faltenbalg mehrlagig ausgebildet sein. Dadurch können Lagen mit unterschiedlichen Filtereigenschaften miteinander kombiniert werden.

Der Faltenbalg kann wenigstens eine Lage aus sorptionsfähigen Partikeln aufweisen. Dabei kommen als sorptionsfähige Partikel insbesondere Partikel aus Aktivkohle in Betracht. Sorptionsfähige Partikel nehmen unerwünschte gasförmige Bestandteile aus der zu filtrierenden Zuluft auf. Dadurch verbessert sich die Luftqualität der zu filternden Zuluft.

Vorzugsweise ist die Lage mit den sorptionsfähigen Partikeln zwischen weiteren Filterlagen eingebettet. Die weiteren Filterlagen bestehen vorzugsweise aus Vliesstoff. Durch diese schichtweise Anordnung sind die Partikel verliersicher in den Faltenbalg eingebettet.

In einer alternativen Ausgestaltung weist der Faltenbalg zwei Lagen aus sorptionsfähigen Partikeln auf, welche durch eine Lage aus Vliesstoff voneinander getrennt sind. Ein derartiger Faltenbalg weist entsprechend fünf Filterlagen auf.

Die der Lage mit den sorptionsfähigen Partikeln zugeordnete umlaufende Kante kann versiegelt sein. Dadurch kann verhindert werden, dass sorptionsfähige Partikel entlang der Kante aus der Lage herausrieseln. Die Kantenversiegelung kann beispielsweise dadurch erfolgen, dass die die sorptionsfähigen Partikel enthaltende Lage umgebenden Lagen im Bereich der Kanten stoffschlüssig miteinander verbunden werden. Dadurch entsteht eine Kantenversiegelung. Diese kann beispielsweise durch Ultraschallschweißen hergestellt werden. Alternativ kann die umlaufende Kante auch mit einem Klebemittel, beispielsweise einem heißschmelzenden Klebemittel versiegelt sein. Die Kantenversiegelung ist insbesondere im Zusammenhang mit der erfindungsgemäßen formschlüssigen Anordnung des Rahmenelementes im Bereich der Endfalte vorteilhaft, da das Rahmenelement aufgrund der formschlüssigen Anbindung keinen Schutz vor Herausrieseln der sorptionsfähigen Partikel bietet.

Aus dem Rahmenelement kann ein Filmscharnier ausgebildet sein, welches der Längskante der Endfalte zugeordnet ist. Somit ist das Filmscharnier der Spitze des V-förmigen Rahmenelementes zugeordnet. Das Filmscharnier erleichtert das Umbiegen eines flächig ausgebildeten Rahmenelementes zu dem V-förmigen Rahmenelement, welches die Endfalte des Faltenbalgs umgibt. Des Weiteren ergibt sich durch das Filmscharnier eine definierte Kante, beziehungsweise eine Spitze des Rahmenelementes, welche vorgewölbt ist und dadurch als Dichtkante wirkt und welche mit elastischer Vorspannung linienförmig an dem Filtergehäuse anliegt und die Stirnseiten des Faltenbalgs gegenüber dem Filtergehäuse abdichtet.

Wenn der Faltenbalg mehrlagig ausgebildet ist oder die Filterlage eine große Dicke aufweist, kann es je nach Dicke des Faltenbalges sinnvoll sein, zwei oder mehrere Filmscharniere in das Rahmenelement einzubringen, so dass ein Abschnitt des Rahmenelementes zwischen den beiden Filmscharnieren an der Längskante der Endfalte formschlüssig anliegt. Bei dieser Ausgestaltung wirkt zumindest das dem Faltenbalg abgewandte Filmscharnier als Dichtkante.

Die Wölbung kann dadurch verwirklicht sein, dass das Rahmenelement relativ zu der Endfalte ein Übermaß aufweist. Bei dieser Ausgestaltung ist die Längsstreckung des Rahmenelementes vor der Montage größer als die Längserstreckung des Faltenbalges im Bereich der Endfalte. Nach Montage wird dabei das Rahmenelement so verformt, dass es dieselbe Längserstreckung aufweist wie die Endfalte. Dadurch bildet sich eine Abwölbung des Rahmenelementes aus.

In einer vorteilhaften Ausgestaltung kann die Erstreckung der Endfalte in Bezug auf die Erstreckung der Faltenwände des Faltenbalgs verkürzt sein. Dies führt dazu, dass das Rahmenelement so ausgebildet sein kann, dass sowohl das Filmscharnier als auch die Faltenrücken in derselben Horizontalebene parallel zur Außenkante des Kantenelementes verlaufen.

Der Faltenbalg kann als Kleinbalg ausgebildet sein. Ein Kleinbalg ist dadurch gekennzeichnet, dass dieser in einem gewünschten Sollmaß vorliegt, bevor die Kantenelemente und das Rahmenelement an dem Faltenbalg zur Herstellung eines Filterelementes angebracht werden. Die Zick-Zack-Form eines Kleinbalgs wird zumeist mit thermischer Unterstützung erzeugt. Die dadurch erzeugten Falten sind sehr formstabil. Dies bringt jedoch den Nachteil mit sich, dass sich im Bereich der Endfalte lediglich eine geringe Vorwölbung des Faltenbalges ergibt. Durch die erfindungsgemäße Ausgestaltung des Rahmenelementes kann jedoch dieser Nachteil kompensiert werden. Die Vorwölbung bildet sich aus dem Rahmenelement aus, welche die Abdichtfunktion im Bereich der Stirnseiten des Filterelementes übernimmt.

Das Filterelement kann als Innenraum-Filter für mobile Anwendungen ausgebildet sein. Eine Anwendung ist hier insbesondere in Kraftfahrzeugen gegeben. Das erfindungsgemäße Filterelement ist besonders kompakt und weist eine hohe Filterleistung auf, wobei unerwünschte Nebenströme durch die Dichtfunktion des Rahmenelementes unterbunden werden. Dadurch ist das Filterelement besonders für mobile Anwendungen geeignet.

Ein Filterelement gemäß einer alternativen Ausgestaltung gemäß Anspruch 13 umfasst einen zick-zack-förmigen Faltenbalg mit Faltenwänden und Faltenrücken, wobei die Kanten der Faltenwände und Faltenrücken mit Kantenelementen versehen sind und wobei zumindest einer Endfalte des Faltenbalgs ein Rahmenelement zugeordnet ist, wobei das Rahmenelement in Bezug auf die Längserstreckung der Endfalte ein Übermaß aufweist.

Bei dieser Ausgestaltung ist das Rahmenelement der ebenfalls der Endfalte zugeordnet. Dabei ist das Rahmenelement aber lediglich einer Hauptseite der Endfalte zugeordnet und dementsprechend entweder auf der dem Faltenbalg abgewandten Hauptseite der Endfalte oder auf der dem Faltenbalg zugewandten Hauptseite der Endfalte angeordnet. Das Rahmenelement ist stoffschlüssig mit den Kantenelementen verbunden. Aufgrund des Übermaßes wölbt sich das Rahmenelement nach dem Einspannen zwischen den Kantenelementen vor und verbessert dadurch die Dichtwirkung des Filterelementes im Bereich der Stirnseiten. Dabei kann das Rahmenelement eine eigene Dichtkante ausbilden, wenn das Rahmenelement auf der dem Faltenbalg abgewandten Hauptseite der Endfalte montiert ist. Alternativ kann das Rahmenelement mittels der Wölbung auch die Endfalte an das Filtergehäuse andrücken, wenn das Rahmenelement auf der dem Faltenbalg zugewandten Hauptseite der Endfalte angeordnet

Vorzugsweise ist das Rahmenelement rechteckig ausgebildet. Des Weiteren ist das Rahmenelement vorzugsweise aus einem Vliesstoff ausgebildet.

Einige Ausgestaltungen des erfindungsgemäßen Filterelementes werden nachfolgend anhand der Figuren näher erläutert. Diese zeigen, jeweils schematisch:
- Fig. 1: ein Filterelement im Schnitt;
- Fig. 2: ein Filterelement mit einem mehrlagigen Faltenbalg im Schnitt;
- Fig. 3: im Detail das Filterelement im Bereich einer Endfalte;
- Fig. 4: ein Filterelement in der Draufsicht;
- Fig. 5: ein Filterelement, welches nicht unter die Erfindung fällt;
- Fig. 6: eine Filteranordnung, umfassend ein Filterelement und ein Filtergehäuse.

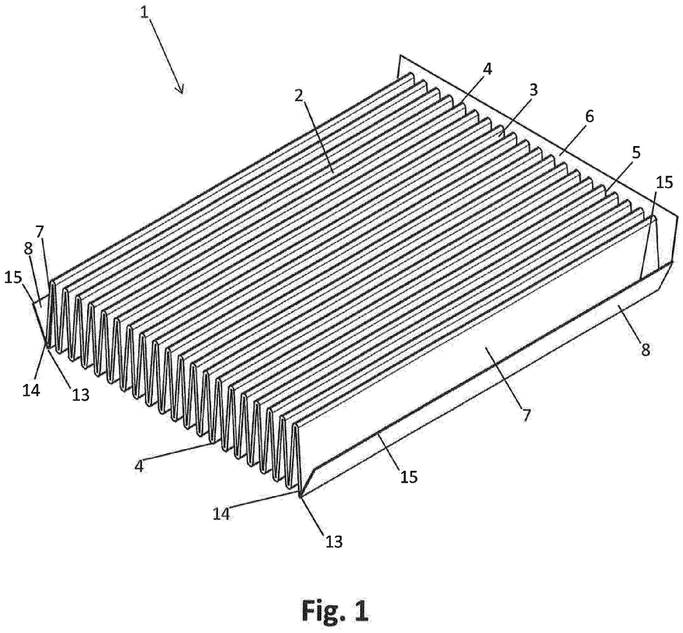

Figuren 1 bis 4 zeigen ein Filterelement 1, umfassend einen zick-zack-förmigen Faltenbalg 2 mit Faltenwänden 3 und Faltenrücken 4. Zur Herstellung des Faltenbalgs wird ein flächiges Filtermaterial eine Zick-Zack-Form gebracht, bei welchem die Faltenwände 3 geneigt zueinander ausgerichtet sind. Die Kanten 5 der Faltenwände 3 und Faltenrücken 4 sind mit Kantenelementen 6 versehen. Die Kantenelemente 6 sind bei der vorliegenden Ausgestaltung rechteckig ausgebildet. Die Bereiche des Filterelementes 1 mit den Kantenelementen 6 bilden Seitenwände. Die Verbindung von Faltenbalg 2 und Kantenelementen 6 erfolgt über ein heißschmelzendes Klebemittel.

Die Faltenwände 3, an denen sich keine weiteren Faltenwände anschließen und deren Faltenrücken 4 eine in Längsrichtung verlaufende Kante ausbildet, bilden Endfalten 7. Den Endfalten 7 des Faltenbalgs sind Rahmenelemente 8 zugeordnet. Die Endfalten 7 mit den Rahmenelementen 8 bilden die Stirnseiten des Filterelementes 1. Dabei sind die Rahmenelemente 8 aus einem separaten Element ausgebildet. Die Rahmenelemente 8 umgeben die Endfalte 7 unter Bildung eines Formschlusses beidseitig, wobei die Rahmenelemente 8 an den Kantenelementen 6 festgelegt sind. Dazu sind die Rahmenelemente 8 V-förmig ausgebildet und auf die Endfalten 7 aufgesteckt, so dass die Rahmenelemente 8 die Endfalten 7 auf beiden Hauptseiten abschnittsweise umgeben. Die Spitzen der V-förmigen Rahmenelemente 8 sind den Längskanten 14 der Endfalten 7 zugeordnet.

Dabei sind die Rahmenelemente 8 ausschließlich mit den Kantenelementen 6 stoffschlüssig verbunden. Dies erfolgt vorliegend durch Verkleben von Rahmenelementen 8 und Kantenelementen 6 mittels eines heißschmelzenden Klebemittels.

Der Faltenbalg 2, die Kantenelemente 6 und die Rahmenelemente 8 sind aus einem Vliesstoff ausgebildet. Vorliegend ist der Faltenbalg 2 als Kleinbalg ausgebildet. Ein Kleinbalg entsteht aus einem auf Maß zugeschnittenen flächigen Element, welches in die gefaltete Gestalt des Faltenbalgs 2 überführt wird.

Das Filterelement 1 ist als Innenraum-Filter für mobile Anwendungen, insbesondere als Kabinenfilter für Kraftfahrzeuge ausgebildet.

Bei der Ausgestaltung gemäß Figur 1 ist der Faltenbalg 2 des Filterelementes 1 einlagig ausgebildet.

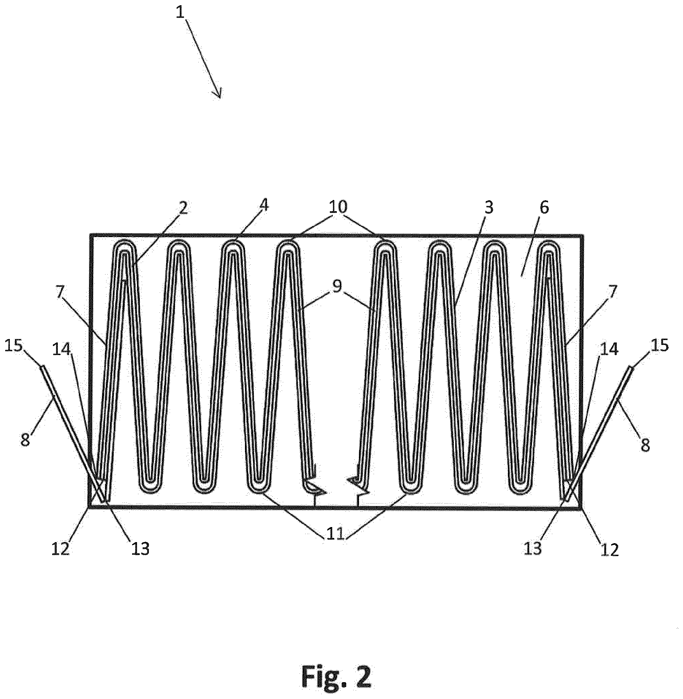

Figur 2 zeigt eine alternative Ausgestaltung des in Figur 1 beschriebenen Filterelementes 1, wobei der Faltenbalg 2 mehrlagig ausgebildet ist. Bei der vorliegenden Ausgestaltung weist eine Lage 9 des Faltenbalgs 2 sorptionsfähige Partikel auf. Die sorptionsfähigen Partikel umfassen Aktivkohle. Dabei ist die Lage 9 mit den sorptionsfähigen Partikeln zwischen weiteren Lagen 10, 11 aus Vliesstoff eingebettet. Damit die sorptionsfähigen Partikel sicher in der Lage 9 mit den sorptionsfähigen Partikeln fixiert sind, ist die der Lage 9 mit den sorptionsfähigen Partikeln zugeordnete Kante 12 versiegelt. Dazu sind die Lagen 10, 11 stoffschlüssig miteinander verbunden. Die stoffschlüssige Verbindung der Lagen 9, 10, 11 kann durch Ultraschallschweißen oder über ein zusätzliches Klebemittel, vorzugsweise ein heißschmelzendes Klebemittel hergestellt werden.

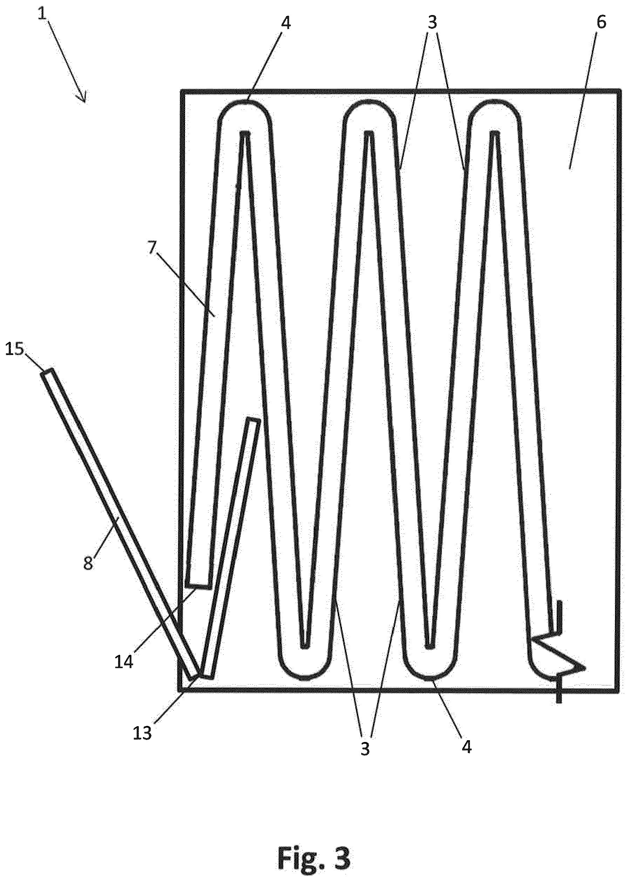

Figur 3 zeigt im Detail das Filterelement 1 im Bereich einer Endfalte 7. Aus dem V-förmig ausgebildeten Rahmenelement 8, welches die Endfalte 7 des Faltenbalges 2 umgibt, ist ein Filmscharnier 13 ausgebildet. Dabei ist das Filmscharnier 13 der V-förmigen Spitze des Rahmenelementes 8 zugeordnet, welche wiederum der Längskante 14 der Endfalte 7 des Faltenbalgs 2 zugeordnet ist. Bei der Ausgestaltung gemäß Figur 3 ist die Erstreckung der Endfalte 7 im Vergleich zu den Faltenrücken 4 des Faltenbalgs 2 verkürzt ausgebildet. Dadurch ist das Filmscharnier 13 des Rahmenelementes 8 in derselben Horizontalebene angeordnet wie die Faltenrücken 4 des Faltenbalges 2.

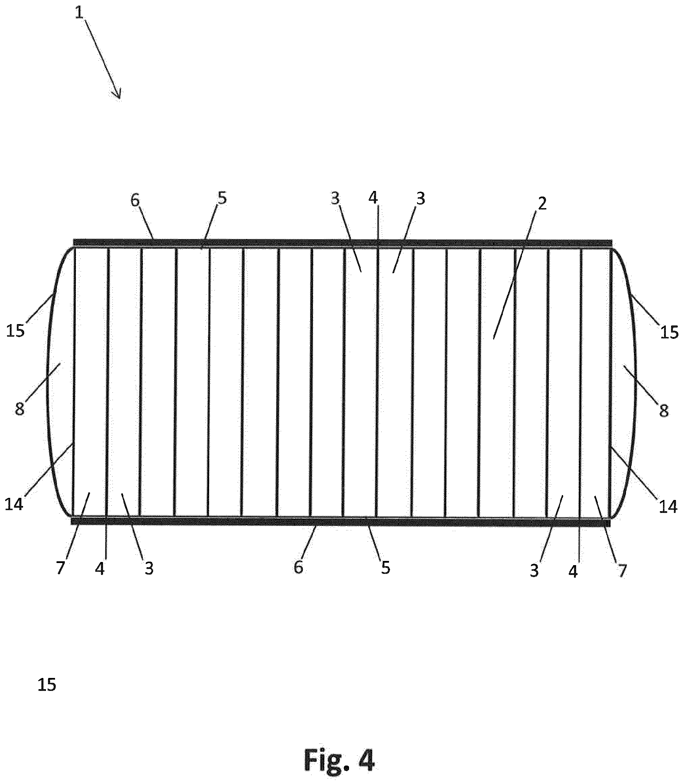

Figur 4 zeigt ein Filterelement 1 in der Draufsicht. Dabei ist zu erkennen, dass das Rahmenelement 8 so ausgebildet ist, dass es sich in Richtung der dem Faltenbalg 2 abgewandten Seite abwölbt. Die Wölbung entsteht, weil das Rahmenelement 8 in Bezug auf die Längserstreckung der Endfalte 7 ein Übermaß aufweist. Beim Verbinden des Faltenbalges 2 und der Rahmenelemente 8 mit den Kantenelementen 6 entsteht dadurch die Vorwölbung des Rahmenelementes 8. Die von dem Faltenbalg 2 abragende Kante des Rahmenelementes 8 bildet dabei eine Dichtkante 15.

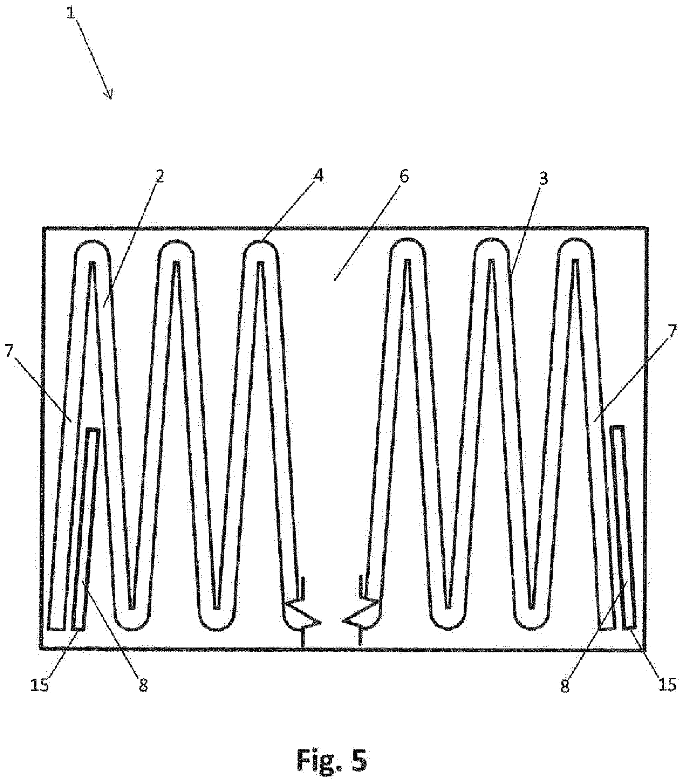

Figur 5 zeigt ein alternatives Filterelement 1, welches nicht unter die Erfindung fällt. Das Filterelement 1 umfasst einen zick-zack-förmigen Faltenbalg 2 mit Faltenwänden 3 und Faltenrücken 4, wobei die Kanten 5 der Faltenwände 3 und Faltenrücken 4 mit Kantenelementen 6 versehen sind und wobei zumindest einer Endfalte 7 des Faltenbalgs 2 ein Rahmenelement 8 zugeordnet ist, wobei das Rahmenelement 8 in Bezug auf die Längserstreckung der Endfalte 7 ein Übermaß aufweist. Das Rahmenelement 8 ist aus einem Vliesstoff ausgebildet und lediglich mit den Kantenelementen 6 mittels eines heißschmelzenden Klebemittels stoffschlüssig verbunden. Auf der einen Stirnseite ist das Rahmenelement 8 der dem Faltenbalg 2 abgewandten Hauptseite der Endfalte 7. Auf der anderen Stirnseite ist das Rahmenelement 8 auf der dem Faltenbalg 2 zugewandten Hauptseite der Endfalte 7 angeordnet.

Die Ausgestaltung des Faltenbalgs 2 und der Kantenelemente 6 entspricht den in den Figuren 1 bis 4 gezeigten Filterelementen 1.

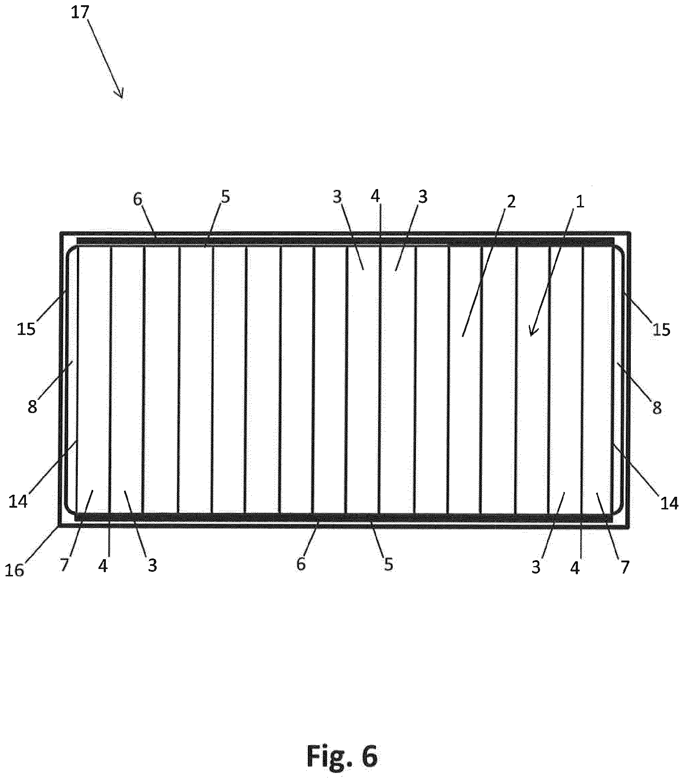

Figur 6 zeigt eine Filteranordnung 17, umfassend ein Filterelement 1 wie in den Figuren zuvor beschrieben und ein Filtergehäuse 16. Das Filterelement 1 ist in das Filtergehäuse 16 eingelegt, wobei die Kantenelemente 6 eine Abdichtung an den Seitenwänden des Filterelementes 1 gegenüber dem Filtergehäuse 16 bewirken. Die Rahmenelemente 8 bewirken eine Abdichtung an den Stirnseiten des Filterelementes 1 gegenüber dem Filtergehäuse 16. Die Rahmenelemente 8 liegen mit ihren Dichtkanten 15 unter elastischer Vorspannung dichtend an dem Filtergehäuse 16 an.

Die Durchströmung der Zuluft durch die Filteranordnung 17 erfolgt vorzugsweise derart, dass die Zuluft in Richtung auf die Schenkel der V-förmigen Rahmenelemente 8 strömt. Dabei entsteht zwischen den Schenkeln der Rahmenelemente 8 ein Überdruck, welcher zu einem Aufspreizen der Schenkel der Rahmenelemente 8 führt. Infolgedessen erhöht sich der Anpressdruck der Dichtkante 15 an das Filtergehäuse 16, was zu einer verbesserten Abdichtung führt.

## Patentansprüche

1. Filterelement (1), umfassend einen zick-zack-förmigen Faltenbalg (2) mit Faltenwänden (3) und Faltenrücken (4), wobei die Kanten (5) der Faltenwände (3) und Faltenrücken (4) mit Kantenelementen (6) versehen sind und wobei zumindest einer Endfalte (7) des Faltenbalgs (2) ein Rahmenelement (8) zugeordnet ist, wobei das Rahmenelement (8) die Endfalte (7) unter Bildung eines Formschlusses beidseitig umgibt, wobei das Rahmenelement (8) an den Kantenelementen (6) festgelegt ist, **dadurch gekennzeichnet, dass**
das Rahmenelement (8) so ausgebildet ist, dass es sich in Richtung der dem Faltenbalg (2) abgewandten Seite abwölbt und dass das Rahmenelement (8) aus Vliesstoff ausgebildet ist.

2. Filterelement nach Anspruch 1, **dadurch gekennzeichnet, dass** das Rahmenelement (8) ausschließlich mit den Kantenelementen (6) stoffschlüssig verbunden ist.

3. Filterelement nach Anspruch 1 oder 2, **dadurch gekennzeichnet, dass** der Faltenbalg (2) aus einem Vliesstoff ausgebildet ist.

4. Filterelement nach einem der Ansprüche 1 bis 3, **dadurch gekennzeichnet, dass** der Faltenbalg (2) mehrlagig ausgebildet ist.

5. Filterelement nach Anspruch 4, **dadurch gekennzeichnet, dass** zumindest eine Lage (9) des Faltenbalgs (2) sorptionsfähige Partikel aufweist.

6. Filterelement nach Anspruch 4 oder 5, **dadurch gekennzeichnet, dass** die Lage (9) mit den sorptionsfähigen Partikeln zwischen weiteren Lagen (10, 11) aus Vliesstoff eingebettet ist.

7. Filterelement nach Anspruch 6, **dadurch gekennzeichnet, dass** die der Lage (9) mit den sorptionsfähigen Partikeln zugeordnete Kante (12) versiegelt ist.

8. Filterelement nach einem der vorangehenden Ansprüche , **dadurch gekennzeichnet, dass** aus dem Rahmenelement (8) ein Filmscharnier (13) ausgebildet ist, welches der Längskante (14) der Endfalte (7) zugeordnet ist.

9. Filterelement nach Anspruch 1, **dadurch gekennzeichnet, dass** das Rahmenelement (8) in Bezug auf die Längserstreckung der Endfalte (7) ein Übermaß aufweist.

10. Filterelement nach einem der Ansprüche 1 bis 9, **dadurch gekennzeichnet, dass** der Faltenbalg (2) als Kleinbalg ausgebildet ist.

11. Filterelement nach einem der Ansprüche 1 bis 10, **dadurch gekennzeichnet, dass** das Filterelement (1) als Innenraum-Filter für mobile Anwendungen ausgebildet ist.

## Claims

1. Filter element (1), comprising a pleated bellows (2) of zigzag shape with pleat walls (3) and pleat vertices (4), there being edge elements (6) provided to the edges (5) of the pleat walls (3) and pleat vertices (4) and there being a frame element (8) located in the vicinity of at least one terminal pleat (7) of the pleated bellows (2), where the frame element (8) bilaterally surrounds the terminal pleat (7), thus forming a interlocking connection, and the frame element (8) here has been secured on the edge elements (6),
**characterized in that**
the configuration of the frame element (8) is such that it bulges in the direction of the side facing away from the pleated bellows (2) and that the frame element (8) is configured from nonwoven fabric.

2. Filter element according to Claim 1, **characterized in that** the frame element (8) has been exclusively coherently bonded to the edge elements (6).

3. Filter element according to Claim 1 or 2, **characterized in that** the pleated bellows (2) is configured from a nonwoven fabric.

4. Filter element according to one of Claims 1 to 3, **characterized in that** the pleated bellows (2) is configured from a plurality of plies.

5. Filter element according to Claim 4, **characterized in that** at least one ply (9) of the pleated bellows (2) comprises sorbent particles.

6. Filter element according to Claim 4 or 5, **characterized in that** the ply (9) with the sorbent particles has been embedded between further plies (10, 11) made of nonwoven fabric.

7. Filter element according to Claim 6, **characterized in that** the edge (12) of the ply (9) with the sorbent particles has been sealed.

8. Filter element according to one of the preceding claims, **characterized in that** a film hinge (13) located in the vicinity of the longitudinal edge (14) of the terminal pleat (7) is configured from the frame element (8).

9. Filter element according to Claim 1, **characterized in that** the frame element (8) is oversized in relation to the longitudinal dimension of the terminal pleat (7).

10. Filter element according to one of Claims 1 to 9, **characterized in that** the pleated bellows (2) is configured as small bellows unit.

11. Filter element according to one of Claims 1 to 10, **characterized in that** the filter element (1) is configured as filter for interior spaces in mobile applications.

## Revendications

1. Élément filtrant (1), comprenant un soufflet (2) en accordéon muni de parois de pli (3) et de dos de pli (4), dans lequel les bords (5) des parois de pli (3) et des dos de pli (4) sont munis d'éléments de bord (6), et dans lequel un élément de cadre (8) est associé à au moins un pli d'extrémité (7) du soufflet (2), l'élément de cadre (8) entourant le pli d'extrémité (7) des deux côtés pour établir une complémentarité de forme, l'élément de cadre (8) étant immobilisé sur les éléments de bord (6),
**caractérisé en ce que** l'élément de cadre (8) est réalisé de telle sorte qu'il est incliné en direction du côté détourné du soufflet (2), et **en ce que** l'élément de cadre (8) est réalisé en non-tissé.

2. Élément filtrant selon la revendication 1, **caractérisé en ce que** l'élément de cadre (8) est relié exclusivement aux éléments de bord (6) par liaison de matière.

3. Élément filtrant selon la revendication 1 ou 2, **caractérisé en ce que** le soufflet (2) est réalisé en non-tissé.

4. Élément filtrant selon l'une quelconque des revendications 1 à 3, **caractérisé en ce que** le soufflet (2) est réalisé en plusieurs couches.

5. Élément filtrant selon la revendication 4, **caractérisé en ce qu'**au moins une couche (9) du soufflet (2) présente des particules adsorbantes.

6. Élément filtrant selon la revendication 4 ou 5, **caractérisé en ce que** la couche (9) munie des particules adsorbantes est incorporée entre des couches supplémentaires (10, 11) en non-tissé.

7. Élément filtrant selon la revendication 6, **caractérisé en ce que** le bord (12) associé à la couche (9) munie des particules adsorbantes est scellé.

8. Élément filtrant selon l'une quelconque des revendications précédentes, **caractérisé en ce qu'**une charnière intégrée (13) est réalisée à partir de l'élément de cadre (8) et associée au bord longitudinal (14) du pli d'extrémité (7).

9. Élément filtrant selon la revendication 1, **caractérisé en ce que** l'élément de cadre (8) présente une surcote par rapport à l'extension longitudinale du pli d'extrémité (7).

10. Élément filtrant selon l'une quelconque des revendications 1 à 9, **caractérisé en ce que** le soufflet (2) est réalisé sous la forme d'un soufflet de petit format.

11. Élément filtrant selon l'une quelconque des revendications 1 à 10, **caractérisé en ce que** l'élément filtrant (1) est réalisé sous la forme d'un filtre d'habitacle pour applications mobiles.
